# EUROPÄISCHE PATENTSCHRIFT

(11) **EP 1 071 983 B1**
(45) Veröffentlichungstag und Bekanntmachung des Hinweises auf die Patenterteilung: **29.05.2002**
(21) Anmeldenummer: 98966578.1
(22) Anmeldetag: 23.12.1998
(51) Int. Cl.: G05B 19/042, G05B 19/10

(54) **VERKÜRZUNG DER PROZESSORLAUFZEIT BEI EINER PROGRAMMIERBAREN STEUERUNG**
REDUCING THE PROCESSOR OPERATING TIME FOR A PROGRAMMABLE CONTROLLER
RACCOURCISSEMENT DU TEMPS DE CYCLE D'UN PROCESSEUR POUR UNE COMMANDE PROGRAMMABLE

(30) Priorität: 17.04.1998 DE 19817913
(43) Veröffentlichungstag der Anmeldung: 31.01.2001
(73) Patentinhaber: Moeller GmbH, 53115 Bonn (DE)
(72) Erfinder: HUBERT, Rolf, D-53229 Bonn (DE); HÖGENER, Jürgen, D-53859 Niederkassel (DE); BAUERFEIND, Dieter, D-53177 Bonn (DE)
(74) Vertreter: Mäder, Winfried
(86) Internationale Anmeldenummer: DE9803778
(87) Internationale Veröffentlichungsnummer: WO9954793

(56) Entgegenhaltungen:
- DE-A- 19 530 842
- DE-U- 29 602 328
- US-A- 5 808 278

## Beschreibung

Die Erfindung betrifft eine programmierbare Steuerung nach dem Oberbegriff des Anspruchs 1.

Es ist bekannt, derartige Steuerungen in einem STOP-Zustand (Anwenderprogramm nicht aktiv) der Steuerung über eine in die Steuerung integrierte Bedieneinheit unter der grafischen Kontrolle eines ebenfalls in die Steuerung integrierten Bildschirms zu programmieren. Ferner ist im STOP-Zustand über den Bildschirm der Steuerung das Anwenderprogramm einsehbar und werden im RUN-Zustand (Anwenderprogramm aktiv) Signalzustände von Eingängen und Ausgängen der Steuerung grafisch dargestellt (Fa. Siemens, Handbuch "LOGO!", Bestell-Nr. 6ED1 050 1AA00-0AE1).

Aufgabe der Erfindung ist es, eine programmierbare Steuerung der eingangs genannten Art zu schaffen, die bei gleichem Bedien - bzw. Programmierkomfort die Leistungsfähigkeit der Steuerung deutlich erhöht.

Diese Aufgabe wird durch eine gattungsgemäße Steuerung mit dem Kennzeichen des Anspruchs 1 gelöst.

Erfindungsgemäß wird durch die Mittel zur Umschaltung der Zustandsanzeige des Bildschirms zwischen einem aktiven Anzeigezustand, in dem auf dem Bildschirm Signalzustände von Ein- und Ausgängen der Steuerung sowie von Signalzuständen von Funktionsbausteinen und dergleichen angezeigt werden, und einem inaktiven Anzeigezustand, in dem auf dem Bildschirm keine aktuelle Anzeige von Signalzuständen dargestellt wird, die Prozessorlaufzeit bzw. die Zykluszeit eines ablaufenden (aktiven) Anwenderprogramms beeinflußbar. In einem standardmäßigen Betrieb ist die Zustandsanzeige auf dem Bildschirm aktiv. Hierfür müssen in regelmäßigen Abständen während des Ablaufes des Anwenderprogramms die anzuzeigenden Signalzustände abgefragt und neu zur Anzeige gebracht werden (Refresh). Dieser Refresh benötigt jedoch wertvolle Zykluszeit. Durch die erfindungsgemäße Ausgestaltung der Steuerung ist die Zustandsanzeige des Bildschirms abschaltbar, so daß der regelmäßige Refresh entfällt und die Zykluszeit entsprechend verkürzt wird. Mit Vorteil können somit auch zeitkritischere Vorgänge bewältigt werden.
In einer bevorzugten Ausführungsform der Erfindung sind die Mittel zur Umschaltung der Zustandsanzeige als eine Kombination von mindestens zwei Tasten ausgebildet. Durch vorzugsweise gemeinsame Betätigung zweier definierter Tasten wird so eine Umschaltung der Zustandsanzeige realisiert.
In einer anderen Ausführungsform der Erfindung wird diese Umschaltung automatisch realisiert, indem z.B. nur in jedem n-ten Zyklus die Zustandsanzeige aktiviert wird. Bei einer durchschnittlichen Zykluszeit von 5-10 ms und einer Größenordnung von ca. 200 ms, was die Wahrnehmbarkeit durch das menschliche Auge betrifft, ist es sinnvoll, nur jeden zwanzigsten bis vierzigsten Zyklus die Zustandsanzeige zu aktivieren und so eine Verringerung der Zykluszeit zu gewährleisten. Weitere Vorteile und Ausführungsformen der Erfindung sind in den Unteransprüchen und in der nachfolgenden Figurenbeschreibung enthalten.

Es zeigen:
- Fig. 1: eine speicherprogrammierbare Steuerung, und
- Fig. 2: ein Anwenderprogramm an Hand der Zykluszeit in Form eines Kreisdiagramms.

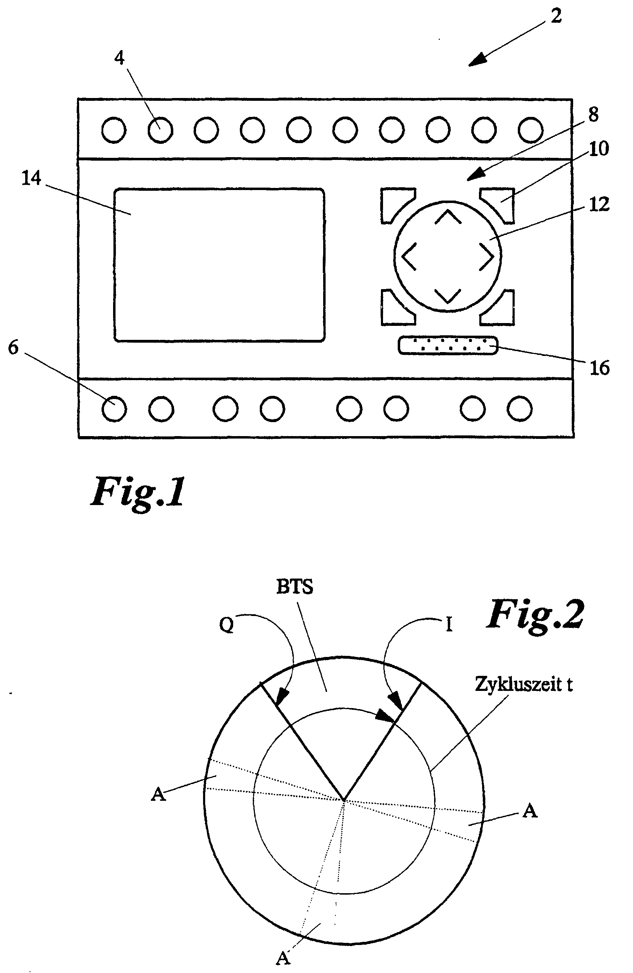

In der Fig. 1 ist eine speicherprogrammierbare Steuerung mit einem Gehäuse 2 und mit einer Reihe von Signaleingängen 4 und Signalausgängen 6 dargestellt. Die programmierbare Steuerung schaltet unter Kontrolle eines Programmes (Anwenderprogramm) den Stromfluß zwischen den Signaleingängen 4 und den Signalausgängen 6 . Das Programm ist mittels einer Bedieneinheit 8, die vorzugsweise aus vier Bedientasten 10 und einer Mehrfunktionstaste 12 besteht, in die Recheneinheit bzw. Rechen-Speichereinheit (z.B. Mikrocontroller) der Steuerung eingebbar. Die Eingabe und der Programmablauf sind auf einem Bildschirm 14 beobachtbar. Auf dem Bildschirm 14 ist während der Programmierung eine menuegeführte Benutzeroberfläche und während des Betriebs die Zustandsanzeige der Signaleingänge und -ausgänge 4, 8 der Steuerung und/oder die Zustandsanzeige von Signaleingängen und -ausgängen von Funktionsbausteinen und/oder Parametern von Funktionsbausteinen möglich. Erfindungsgemäß ist die Zustandsanzeige des Bildschirms 14 durch vordefinierte Mittel 8, 10, 12 zwischen einem aktiven und einem inaktiven Zustand umschaltbar. In einer bevorzugten Ausführung sind die Umschaltmittel durch die Kombination von zwei Bedientasten 10 ausgebildet. Denkbar ist aber auch eine Umschaltung durch eine einzelne Taste. Über eine Schnittstelle 16 kann die Steuerung alternativ auch über einen externen Rechner programmiert und parametriert werden.

In der Fig. 2 ist schematisch ein Anwenderprogramm an Hand seiner Zykluszeit (Zeit für die einmalige Abarbeitung des Anwenderprogramms) dargestellt. Dabei ist die Zykluszeit in Form eines Kreisdiagramms dargestellt. Die wesentlichen Zeitabschnitte einer Zykluszeit werden durch "Einlesen der Signaleingänge" (I), "Abarbeitung des Anwenderprogramms", "Auslesen an die Signalausgänge" (Q), eine "Betriebssystemecke" (BTS) und mindestens einer "Anzeigeecke" (A) gebildet. Wird durch die erfindungsgemäße Ausbildung die Zustandsanzeige des Bildschirms 14 in den inaktiven Zustand umgeschaltet muß fällt der Anteil der Zykluszeit für die Anzeigeecke (A) weg, so daß die Zykluszeit um die Zeit der Anzeigeecke (A) verkürzt wird. In einer Weiterbildung der Erfindung ist dieser Zustand speicherbar, so daß auch nach Spannungsausfall, bei anschließendem Wiederanlauf der Steuerung, der zuvor eingestellte Anzeigezustand eingestellt bleibt. Im inaktiven Anzeigezustand wird die Bildschirmanzeige nicht aktualisiert (refreshed) und wird mit Vorteil einfach ausgeschaltet (keine Anzeige).

## Patentansprüche

1. Programmierbare Steuerung mit einer Recheneinheit, einem Bildschirm (14), einer Bedieneinheit (8) und mit Signaleingängen (4) und Signalausgängen (6), wobei die Recheneinheit, der Bildschirm (14), die Bedieneinheit (8), die Signaleingänge (4) und Signalausgänge (6) in einem gemeinsamen Gehäuse (2) untergebracht sind und wobei Schaltfunktionen durch den Benutzer über eine menuegeführte Benutzeroberfläche auf dem Bildschirm (14) programmierbar sind,
**gekennzeichnet durch** Mittel (8, 10, 12) zur Umschaltung der Zustandsanzeige zwischen einem aktiven Anzeigezustand, in dem auf dem Bildschirm Signalzustände von Ein- und Ausgängen der Steuerung sowie von Signalzuständen von Funktionsbausteinen und dergleichen angezeigt werden, und einem inaktiven Anzeigezustand, in dem auf dem Bildschirm keine aktuelle Anzeige von Signalzuständen dargestellt wird.

2. Programmierbare Steuerung nach Anspruch 1,
**dadurch gekennzeichnet, daß** die Mittel (8, 10, 12) zur Umschaltung der Zustandsanzeige aus mindestens einer Taste der Bedieneinheit (8) bestehen.

3. Programmierbare Steuerung nach Anspruch 1 oder 2,
**dadurch gekennzeichnet, daß** die Mittel (8, 10, 12) zur Umschaltung der Zustandsanzeige aus einer Kombination von zwei Tasten der Bedieneinheit (8) bestehen.

4. Programmierbare Steuerung nach Anspruch 1,
**dadurch gekennzeichnet, daß** die Mittel (8, 10, 12) zur Umschaltung der Zustandsanzeige softwaremäßig ausgebildet sind.

## Claims

1. Programmable controller having a computational unit, a screen (14), a control unit (8) and having signal inputs (4) and signal outputs (6), with the computational unit, the screen (14), the control unit (8), the signal inputs (4) and signal outputs (6) being accommodated in a common housing (2), and in which switching functions can be programmed by the user via a menu-controlled user interface on the screen (14),
**characterized by** means (8, 10, 12) for switching the state display between an active display state, in which signal states of inputs and outputs of the controller as well as signal states of functional modules and the like are displayed on the screen, and an inactive display state, in which no current display of signal states is displayed on the screen.

2. Programmable controller according to Claim 1,
**characterized in that** the means (8, 10, 12) for switching the state display comprises at least one key on the control unit (8).

3. Programmable controller according to Claim 1 or 2,
**characterized in that** the means (8, 10, 12) for switching the state display comprises a combination of two keys on the control unit (8).

4. Programmable controller according to Claim 1,
**characterized in that** the means (8, 10, 12) for switching the state display is in the form of software.

## Revendications

1. Commande programmable avec une unité de calcul, un écran (14), une unité de commande (8) et avec des entrées de signal (4) et des sorties de signal (6), l'unité de calcul, l'écran (14), l'unité de commande (8), les entrées de signal (4) et les sorties de signal (6) étant logés dans un boîtier (2) commun et les fonctions de commutation étant programmables sur l'écran (14) par l'utilisateur par le biais d'une interface utilisateur guidée par menus,
**caractérisée par** des moyens (8, 10, 12) pour changer l'état de l'affichage entre un état d'affichage actif dans lequel les états des signaux des entrées et des sorties de la commande ainsi que les états des signaux des composants fonctionnels et similaires sont affichés sur l'écran et un état d'affichage inactif dans lequel aucun état actuel des signaux n'est représenté à l'écran.

2. Commande programmable selon la revendication 1, **caractérisée en ce que** les moyens (8, 10, 12) pour changer l'état de l'affichage se composent d'au moins une touche de l'unité de commande (8).

3. Commande programmable selon la revendication 1 ou 2, **caractérisée en ce que** les moyens (8, 10, 12) pour changer l'état de l'affichage se composent d'une combinaison de deux touches de l'unité de commande (8).

4. Commande programmable selon la revendication 1, **caractérisée en ce que** les moyens (8, 10, 12) pour changer l'état de l'affichage sont réalisés par logiciel.
